**Europäisches Patentamt**

**European Patent Office**

**Office européen des brevets**

(11) Numéro de publication: **0 281 490**
**A1**

# (12) DEMANDE DE BREVET EUROPEEN

(21) Numéro de dépôt: **88450008.3**

(22) Date de dépôt: **04.03.88**

(51) Int. Cl.⁴: **A 23 N 17/00**

(30) Priorité: **06.03.87 FR 8703210**

(43) Date de publication de la demande:
**07.09.88 Bulletin 88/36**

(84) Etats contractants désignés: **BE DE NL**

(71) Demandeur: **SOCIETE A RESPONSABILITE LIMITEE DITE DUSSAU DISTRIBUTION**
**Quartier Bourdos**
**F-40320 Geaune (FR)**

(72) Inventeur: **Dussau, Christian**
**Quartier Bourdos**
**F-40320 Geaune (FR)**

(74) Mandataire: **Thébault, Jean-Louis**
**Cabinet Thébault S.A. 50 Cours de Verdun**
**F-33000 Bordeaux (FR)**

(54) Installation polyvalente pour la fabrication et la distribution d'aliments pulvérulents pour animaux.

(57) - L'invention concerne une installation polyvalente pour la fabrication et la distribution d'aliments pulvérulents pour animaux comprenant un ensemble de broyage- mélangeage monté sur un dispositif de pesage (4) et comportant une unité de broyage (2) et une unité de mélangeage (3), une pluralité de silos fixes (12,13,42,43) de stockage de différents produits, sous forme pulvérulente sèche ou humide, un système (29) de distribution pneumatique des produits broyés mélangés, un système pneumatique d'aspiration- compression (47) relié à l'unité de broyage (2), à l'unité de mélangeage (3) et au système de distribution (29), et un automate à micro-ordinateur (5) relié au dispositif de pesage (4), au système d'aspiration-compression (47) et à diverses vannes pneumatiques interposées dans les canalisations ou conduits de liaison entre les différents silos, unités et dispositifs ci-dessus.
- Application à l'alimentation des animaux.

FIG.1.

EP 0 281 490 A1

## Description

# INSTALLATION POLYVALENTE POUR LA FABRICATION ET LA DISTRIBUTION D'ALIMENTS PULVERULENTS POUR ANIMAUX

La présente invention a trait à une installation polyvalente pour la fabrication et la distribution d'aliments pulvérulents pour animaux.

L'invention vise à proposer une installation capable d'effectuer les opérations de chargement, pesage, mélange et distribution fractionnée de tous types d'aliments pulvérulents, aussi bien secs qu'humides tels le maïs notamment, l'ensemble des opérations de transfert des produits à traiter, d'un poste à l'autre et y compris les phases d'amont (reprise des produits de départ) et d'aval (distribution sur les lieux de consommation) étant effectuées de manière pneumatique.

La préparation et la distribution d'aliments pour animaux posent encore divers problèmes qui ne sont pas résolus.

C'est ainsi que dans le domaine de la préparation et la distribution d'aliments pulvérulents secs, les installations ou dispositifs existants ne sont pas conçus pour intégrer toute la chaîne des transferts entre les divers postes de pesage, broyage et mélange, depuis le stockage des produits de départ jusqu'à l'endroit de la consommation.

D'autre part, ces dispositifs sont totalement inaptes au traitement d'aliments pulvérulents humides tel le maïs.

En effet, le maïs destiné à l'alimentation du porc en France souffre d'un problème majeur. Après la récolte, il nécessite un séchage afin de pouvoir être conservé et cette opération tend à devenir de plus en plus onéreuse.

Pour pallier ce problème, il a été mis au point une méthode de conservation par voie humide.

Malheureusement, ce produit ainsi transformé possède des inconvénients majeurs.

Ce produit ne se conserve pas lorsqu'il est au contact de l'air pendant plus d'une à deux heures, ce qui oblige à un désilage du produit deux fois par jour et interdit pratiquement l'emploi de chaînes automatiques dans lesquelles le produit tend à fermenter entre deux distributions.

De plus, ce produit a tendance à se comprimer et à voûter en entraînant en général un bourrage dans tous les systèmes mécaniques à base de vis sans fin ou de pastille sous tube.

Les systèmes de distribution qui ont permis de trouver une solution acceptable sont tous basés sur le principe de l'alimentation en soupe ce qui, d'une part, entraîne des investissements très lourds et, d'autre part, n'est pas adaptable aux porcheries déjà construites puisque la soupe nécessite un sol en caillebotis intégral.

L'invention a donc pour but de pallier ces inconvénients en offrant une solution totale de la mécanisation de la fabrication d'aliments à partir de produits secs tout aussi bien que de produits non secs tels que des céréales humides se présentant sous forme pulvérulente.

A cet effet, l'invention a pour objet une installation polyvalente de fabrication et distribution d'aliments pulvérulents pour animaux, caractérisée en ce qu'elle comprend :

- un ensemble de broyage-mélangeage monté sur un dispositif de pesage et comportant une unité de broyage constituée d'une trémie d'attente des produits à broyer et d'un broyeur, et une unité de mélangeage constituée d'une cuve munie intérieurement d'un système de brassage et reliée à l'unité de broyage;

- une pluralité de silos fixes de stockage de différents produits ou ingrédients à mélanger, sous forme pulvérulente ou granulaire sèche ou humide, reliés par des canalisations souples à l'unité de broyage ou à l'unite de mélangeage ;

- un système de distribution pneumatique des produits broyés mélangés, relié, d'une part, à l'orifice d'extraction de ladite unité de mélangeage, d'autre part, à un silo de stockage du produit fini et, enfin, à un ou plusieurs dispositifs de distribution de ce dernier ;

- un système pneumatique d'aspiration-compression relié à l'unité de broyage, à l'unité de mélangeage et au système de distribution, et

- un automate à micro-ordinateur relié au dispositif de pesage, au système d'aspiration-compression et à diverses vannes pneumatiques interposées dans les canalisations ou conduits de liaison entre les différents silos, unités et dispositifs ci-dessus et susceptible de commander sélectivement et successivement les opérations d'aspiration des différents produits dans la trémie d'attente de l'unité de broyage ou dans la cuve de l'unité de mélangeage, le broyage et/ou le mélangeage des produits, l'évacuation sous pression du produit fini, de l'unité de mélangeage vers le système de distribution et son envoi sélectif dans ledit silo de stockage du produit fini ou dans l'un desdits dispostifs de distribution.

Une telle installation constitue une chaîne totale de mécanisation intégrale assurant la liaison entre le stockage des produits entrant dans la composition de l'aliment fini et les loges des animaux.

En particulier, cette installation est capable d'assurer la mécanisation totale de la fabrication d'aliment à partir de céréales humides sous forme pulvérulente alors que tous les systèmes actuellement proposés passent par la phase liquide (réalisation d'une soupe par addition d'eau) ce qui pose les problèmes d'adaptation évoqués plus haut.

D'autres caractéristiques et avantages ressortiront de la description qui va suivre de divers modes et variantes de réalisation de l'installation selon l'invention, description donnée à titre d'exemple uniquement et en regard des dessins annexés sur lesquels :

- Figure 1 est une vue schématique générale de l'installation selon l'invention ;

- Figure 2 illustre une variante de réalisation de l'unité de mélangeage, et

- Figure 3 est une vue schématique des circuits pneumatiques interposés entre le système d'aspiration-compression, l'unité de broyage, l'unité de mélangeage et le système d'évacuation du produit fini.

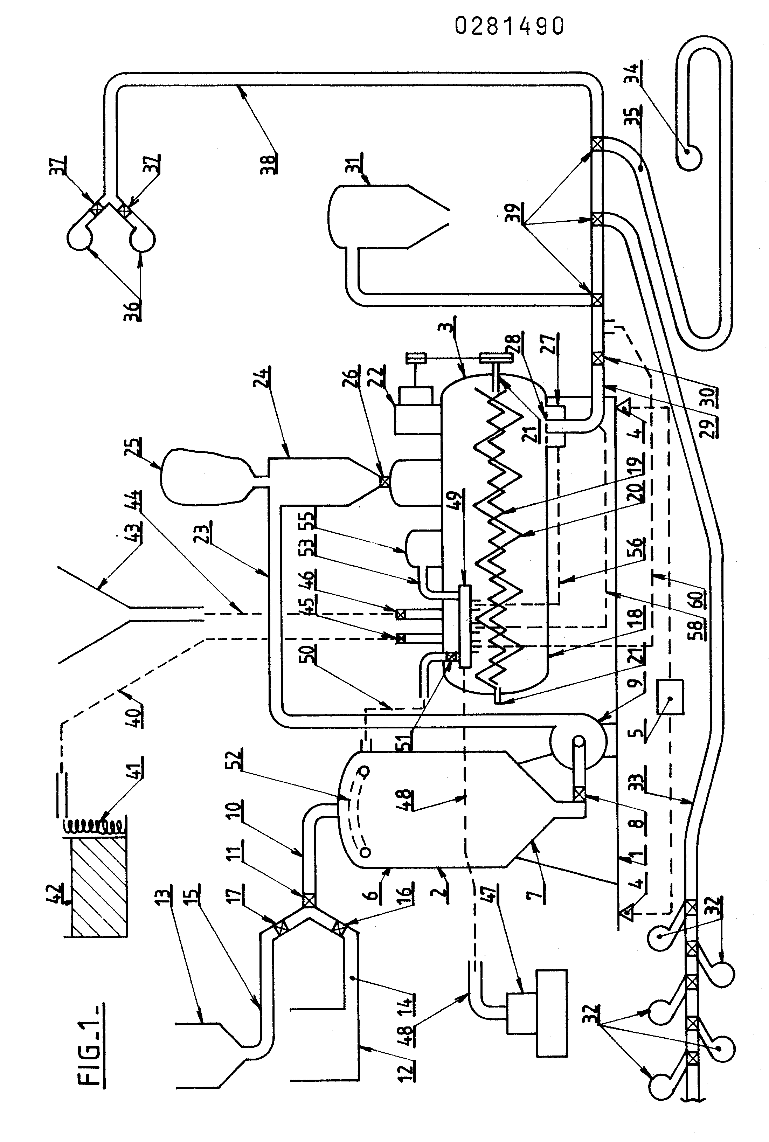

L'installation représentée très schématiquement sur la figure 1 comprend un ensemble monté sur un châssis 1, dit de pesage, et constitué d'une unité de broyage 2 et d'une unité de mélangeage 3.

N'importe quel système de pesage de l'ensemble 1-2-3 peut être utilisé. Sur le schéma de la figure 1 on a symbolisé en 4 un moyen de pesage supportant le châssis 1 et relié à un automate à micro-ordinateur 5 et chargé d'envoyer à celui-ci des données relatives au poids réel instantané de l'ensemble 1-2-3. Ce moyen de pesage peut être des jauges de contraintes qui sont bien connues et n'ont pas besoin d'être décrites plus en détail.

Afin que le pesage soit le plus précis possible, toutes les canalisations ou liaisons entre les unités 2 et 3 et les autres parties de l'installation sont souples et doivent permettre un libre débattement de l'ensemble 1-3 sans que celui-ci soit entravé par lesdites canalisations ou liaisons.

Le pesage en continu de l'ensemble 1 à 3 permet d'effectuer de manière précise la distribution fractionnée de l'aliment fini.

Dans le mode de réalisation schématisé sur la figure 1, l'unité de broyage est constituée d'une cuve étanche cylindrique verticale 6, prolongée en partie inférieure par un tronc de cone 7, à l'extrémité inférieure duquel est placée, dans le coude d'évacuation, une vanne automatique symbolisée en 8, reliée à l'automate 5.

Le coude d'évacuation de la trémie d'attente constituée par l'ensemble 6-7 est relié à un broyeur 9.

A la partie supérieure de la cuve 6 est piquée une canalisation 10 munie d'une vanne automatique 11 et reliée elle-même à deux silos séparés, fixes, 12 et 13, par l'intermédiaire de deux canalisations 14 et 15, chacune munie d'une vanne automatique, 16 et 17, les vannes 11, 16 et 17 étant bien entendu reliées à l'automate.

Les silos 12 et 13 contiennent par exemple respectivement du blé et du soja sous forme pulvérulente ou granulaire.

Le broyeur 9 peut être constitué par l'un quelconque des dispositifs de broyage connus utilisés dans l'alimentation des animaux.

L'unité de mélangeage 3 est constituée par exemple d'une cuve cylindrique étanche horizontale 18 dans laquelle sont disposées deux spires à pas contraires 19 et 20, coaxiales, créant deux courants opposés dans la masse des produits à mélanger. Les deux spires sont solidaires d'un même arbre horizontal 21 traversant de manière étanche la cuve 18 à chaque extrémité, l'une des extrémités de l'arbre étant entraînée en rotation par l'intermédiaire d'un moto-réducteur 22 fixé à la cuve et relié à l'automate 5.

Le broyeur 9 est relié à la cuve 18 par une canalisation 23 débouchant dans un cyclone de décompression 24 surmonté d'une manche de détente 25.

Le cyclone 24 communique avec la partie supérieure de la cuve 18 par l'intermédiaire d'une vanne automatique symbolisée en 26, reliée à l'automate 5.

A l'une des extrémités de la cuve 18 et à sa partie inférieure est disposée une pièce 27 en forme de casserole rapportée sur la cuve et munie intérieurement d'une toile fluidisante 28. L'extraction du produit fini se fait par une canalisation 29 traversant la casserole 27 et débouchant au centre de la toile 28.

Dans la canalisation 29 est disposée une vanne automatique symbolisée en 30 et reliée à l'automate 5.

La canalisation 29 est reliée en parallèle à divers dispositifs, par exemple un silo fixe 31 à aliment fini, une batterie de cyclones 32 de remplissage de loges d'animaux, par l'intermédiaire d'une canalisation 33 et de vannes de dérivation reliées à l'automate 5, un cyclone de distribution manuelle 34 via une canalisation 35, ou une paire de cyclones baladeurs 36 montés sur un chariot mobile automatiquement commandé par l'automate 5. Les cyclones 36 sont reliés, par deux canalisations munies chacune d'une vanne automatique symbolisée en 37 et reliée à l'automate 5, à une canalisation principale 38 reliée à la canalisation 29. Des vannes automatiques symbolisées en 39 sont prévues au départ de chaque canalisation d'alimentation des dispositifs 31,32,34 et 36, ces vannes étant reliées à l'automate 5.

La cuve 18 est par ailleurs reliée directement par une canalisation 40 à une vis désileuse 41 d'un silo 42 à maïs humide pulvérulent, ainsi qu'à une réserve 43 à minéraux pulvérulents par l'intermédiaire d'une canalisation 44.

Les silo 42 et réserve 43 sont à poste fixe et les canalisations 40 et 44 sont munies de vannes automatiques symbolisées en 45 et 46 et reliées à l'automate 5 ainsi que la vis désileuse 41.

Tous les transferts des produits pulvérulents ou granuleux s'opèrent dans l'installation de manière pneumatique, soit par aspiration, soit par propulsion.

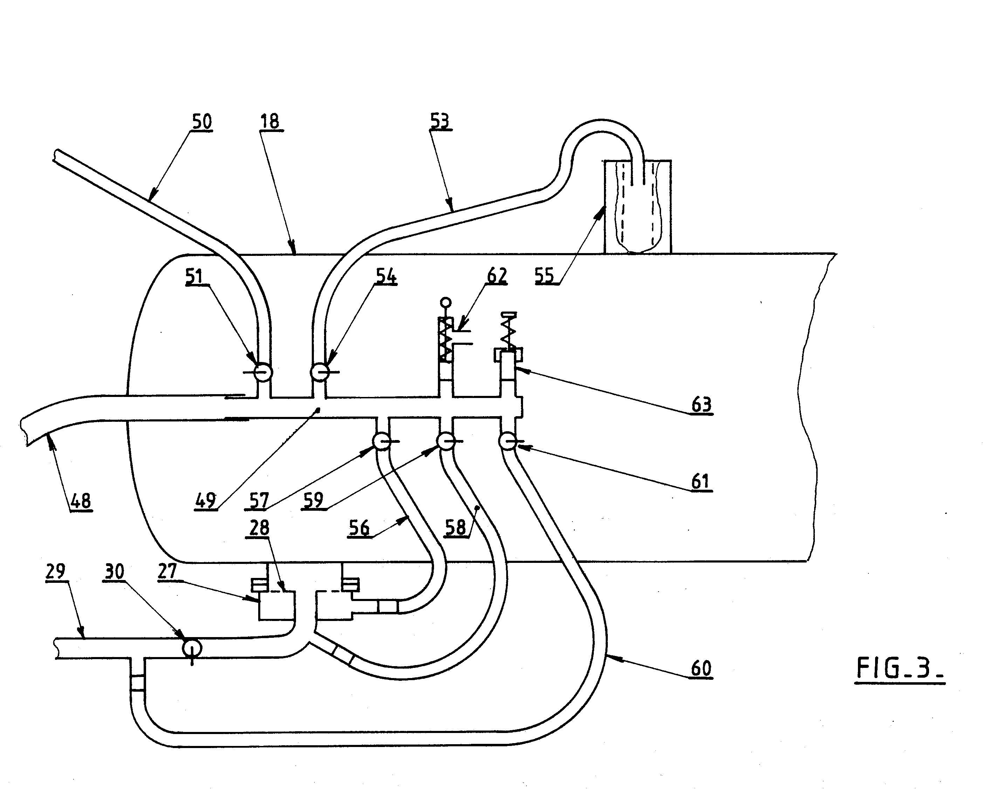

A cet effet, l'installation comprend un groupe moto-compresseur-pompe à vide 47, monté fixe et relié par une canalisation 48 à une rampe distributrice 49 solidaire de la cuve et représentée plus en détail à la figure 3.

La rampe 49 est reliée par une canalisation 50 munie d'une vanne automatique 51, à un filtre à air symbolisé en 52 disposé à l'intérieur et en partie haute de la cuve 6.

La rampe 49 est reliée par une canalisation 53 munie d'une vanne automatique 54 à un filtre d'aspiration 55 disposé en partie haute dans la cuve 18.

La rampe 49 est reliée par une canalisation 56 munie d'une vanne automatique 57 à la casserole 27 de fluidisation.

La rampe 49 est reliée par une canalisation 58 munie d'une vanne automatique 59, à la canalisation 29, entre la casserole 27 et la vanne 30.

La rampe 49 est, enfin, reliée par une canalisation 60 munie d'une vanne automatique 61, à la canalisation 29, en aval de la vanne 30.

Par ailleurs, la rampe 49 est munie d'une soupape de sécurité en pression 62 et d'une soupape de sécurité en dépression 63.

Les vannes 51,54,57,59 et 61 sont bien entendu reliées à l'automate 5.

L'installation décrite ci-dessus peut opérer de différentes manières, car elle est polyvalente, sous la commande entièrement automatisée de l'automate 5.

L'introduction du ou des produits à broyer se fait par aspiration à l'aide du groupe 47. Ce dernier peut être de tout type et doit être capable de passer de manière simple et rapide du fonctionnement en pression au fonctionnement en dépression.

Une manière particulièrement pratique et économique de réaliser un système compresseur-pompe à vide susceptible d'être utilisé dans l'installation selon l'invention, consiste à employer un compresseur de tonne à lisier en changeant les palettes normales équipant ce type d'appareil par des palettes spéciales permettant à ce compresseur de travailler pendant au minimum une heure en continu.

Toutes les canalisations comportent par ailleurs des clapets anti-retour que ce soit dans le réseau pression ou dans le réseau vide.

Les pressions, dépressions et débits sont très variables selon les conditions de travail à savoir : nature du produit à traiter, longueur et section des canalisations, rendement et débit de solide recherché.

En fonctionnement aspiration le groupe 47 permet, via la rampe 49 et la canalisation 53, de transférer des minéraux de la réserve 43 directement dans la cuve 18 par la canalisation 44, du maïs humide désilé du silo 42 directement dans la cuve 18 par la canalisation 40.

Il permet aussi de transférer des produits des silos 12 et 13, au choix, dans l'unité de broyage 2 via la rampe 49 et les canalisations 10 et 50.

En position pression, le groupe 47 permet d'extraire le produit fini de la cuve 18 pour l'envoyer par la canalisation 29 dans l'un des dispositifs 31,32,34,36 au choix.

A cet effet, le groupe 47 envoie de l'air sous pression dans la cuve 18 par la canalisation 53, de l'air de fluidisation dans la casserole 27 par la canalisation 56, de l'air secondaire d'extraction dans la canalisation 29 en amont (dilution primaire) et en aval de la vanne 30, respectivement par les canalisations 58 et 60. La combinaison de la vanne 30 et de la canalisation d'air additionnel 60 permet de créer des séparations d'air dans la canalisation 29 et d'individualiser les doses d'aliment en cours de transport dans cette dernière.

L'automate 5 gère bien entendu tout le processus depuis le prélèvement sélectif du ou des produits ou ingrédients jusqu'à l'envoi du produit fini dans le ou les dispositifs appropriés par l'intermédiaire des vannes (30,37,39,etc...). Le micro-ordinateur de l'automate peut être d'un type quelconque pourvu qu'il puisse gérer les opérations de chargement, de formulation, de broyage, de mélange, distribution et bien entendu de pesage des divers produits ou ingrédients à mélanger.

Les différentes vannes de l'installation sont par exemple des vannes commandées par des vérins eux-mêmes actionnés sur commande de l'automate 5.

La cuve 18 peut être éventuellement munie latéralement d'un dispositif de fluidisation à toile alimentée en air à partir du groupe 47, si cela s'avère nécessaire notamment pour éviter le compactage et le phénomène de voûte dans la cuve 18 et obtenir une extraction correcte et régulière en particulier dans le cas de produits humides tel le maïs.

Il est à noter que l'inversion du fonctionnement du groupe 47 permet de nettoyer automatiquement les filtres 52 et 55.

Le système de brassage à l'aide des deux spires 19 et 20 dans la cuve 18 peut être remplacé par tout autre système susceptible de procurer le même résultat.

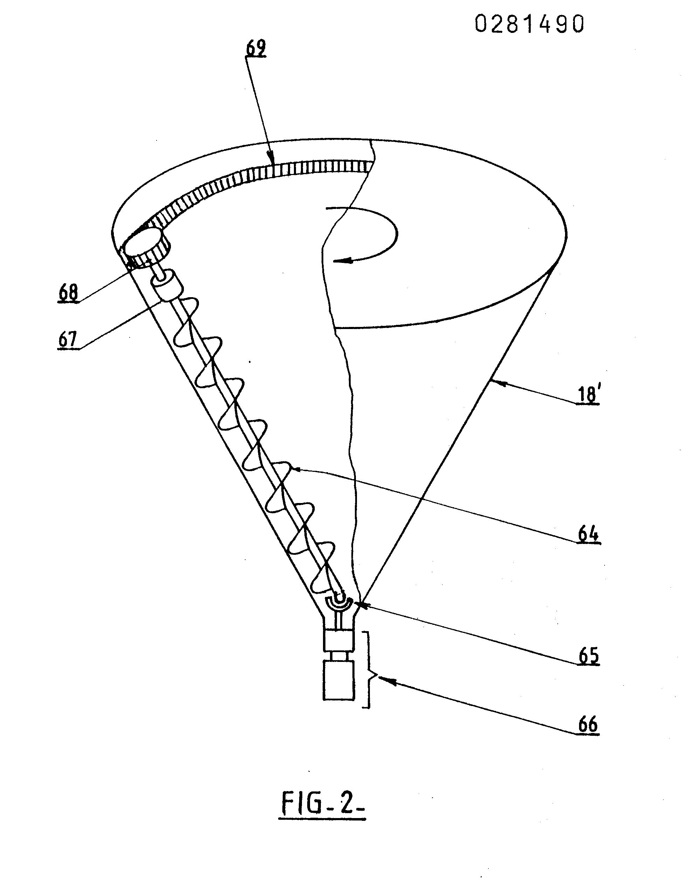

La figure 2 illustre une variante de réalisation de l'unité de mélangeage suivant laquelle la cuve 18' est tronconique avec la pointe en bas et le système de brassage interne est constitué par une vis 64 solidaire d'un arbre entraîné en rotation, par l'intermédiaire d'un joint de cardan 65, par un moto-réducteur 66 fixé à l'extrémité inférieure de la cuve 18'.

L'extrémité supérieure de l'arbre porte-vis 64 entraîne, par un réducteur 67, un pignon 68 en prise avec une couronne dentée ou analogue 69 à l'intérieur et à la partie supérieure de la cuve 18', des moyens étant prévus pour empêcher tout désengrènement entre le pignon et la couronne lors du mouvement oscillant de la vis 64 le long de la paroi tronconique.

Le double mouvement de la vis 64 (rotation autour de son axe et rotation autour de l'axe de la cuve 18') assure un excellent mélange par remontée du produit se trouvant au voisinage de la paroi de la cuve et reprise de ce produit une fois retombé dans la partie inférieure de la cuve.

L'extraction du produit s'effectue latéralement en partie inférieure de la cuve 18', c'est-à-dire au droit du joint de cardan 65, avec l'aide d'une toile de fluidisation alimentée en air à partir de la rampe distributrice 49, l'orifice d'extraction et la toile fluidisante n'étant pas représentés par souci de clarté, sur la figure 2.

La cuve de l'unité 3 peut aussi être cylindro-conique d'axe vertical, le système de brassage étant par exemple constitué par une vis verticale tournant à l'intérieur d'un tube et dont la rotation assure la reprise en bas des produits et leur remontée en partie haute de la cuve.

Dans le cas d'une cuve d'axe vertical il est également prévu, en partie haute, un système de filtration de l'air de mise en pression ou dépression de la cuve, ainsi qu'éventuellement une manche filtrante disposée dans la masse du produit et chargée de fluidiser ce dernier et d'éviter tout compactage (cas du maïs humide notamment).

Il est à noter que l'unité 3 peut comporter des entrées de produit supplémentaires permettant le raccordement direct avec des silos à produits ne nécessitant pas de broyage, ou déjà broyés, l'unité 3 se remplissant en produit directement, par aspiration, selon les quantités en poids programmées dans le micro-ordinateur de l'automate.

Dans l'installation telle que représentée en figure 1, l'unité 2 peut être supprimée s'il n'y a pas nécessité de broyer les produits, auquel cas seule l'unité 3 est soumise à un pesage en continu.

Par ailleurs, l'unité de broyage 2 pourrait être également à poste fixe, seule l'unité 3 étant soumise à un pesage en continu.

Enfin, l'invention n'est évidemment pas limitée aux modes de réalisation représentés et décrits ci-dessus mais en couvre au contraire toutes les variantes notamment en ce qui concerne la nature et l'agencement de l'unité de mélangeage 3, du système de brassage interne à l'unité 3, du système de pesage en continu, du ou des dispositifs de distribution du produit fini.

## Revendications

1. Installation polyvalente de fabrication et distribution d'aliments pulvérulents pour animaux, caractérisée en ce qu'elle comprend :

- un ensemble de broyage-mélangeage monté sur un dispositif de pesage (4) et comportant une unité de broyage (2) constituée d'une trémie (6) d'attente des produits à broyer et d'un broyeur (9), et une unité de mélangeage (3) constituée d'une cuve (18,18') munie intérieurement d'un système de brassage (19,20; 64) et reliée à l'unité de broyage (2) ;

- une pluralité de silos fixes (12,13,42,43) de stockage de différents produits ou ingrédients à mélanger, sous forme pulvérulente ou granulaire sèche ou humide, reliés par des canalisations souples à l'unité de broyage (2) ou à l'unite de mélangeage (3) ;

- un système (29) de distribution pneumatique des produits broyés mélangés, relié, d'une part, à l'orifice d'extraction de ladite unité de mélangeage (3), d'autre part, à un silo (31) de stockage du produit fini et, enfin, à un ou plusieurs dispositifs (32,34,36) de distribution de ce dernier ;

- un système pneumatique d'aspiration-compression (47) relié à l'unité de broyage (2), à l'unité de mélangeage (3) et au système de distribution (29), et

- un automate à micro-ordinateur (5) relié au dispositif de pesage (4), au système d'aspiration-compression (47) et à diverses vannes pneumatiques interposées dans les canalisations ou conduits de liaison entre les différents silos, unités et dispositifs ci-dessus et susceptible de commander sélectivement et successivement les opérations d'aspiration des différents produits dans la trémie d'attente (6) de l'unité de broyage (2) ou dans la cuve (18,18') de l'unité de mélangeage (3), le broyage et/ou le mélangeage des produits, l'évacuation sous pression du produit fini, de l'unité de mélangeage (3) vers le système de distribution (29) et son envoi sélectif dans ledit silo de stockage (31) du produit fini ou dans l'un desdits dispositifs de distribution (32,34,36).

2. Installation suivant la revendication 1, caractérisée en ce que ledit système d'aspiration-compression est un groupe moto-compresseur (47) fonctionnant par simple inversion en pression ou en dépression, et relié audit automate (5) ledit groupe étant relié à une rampe pneumatique distributrice (49) reliée, d'une part, à ladite trémie (6) d'attente des produits à broyer, elle-même reliée par canalisation aux silos (12,13) contenant des produits à broyer, d'autre part, à la cuve (18,18') de l'unité de mélangeage (3) et, enfin, audit système de distribution pneumatique (29), ladite cuve (18,18') étant par ailleurs reliée par des canalisations (40,44) aux silos (42,43) contenant des produits ne devant pas être broyés, des vannes automatiques (45,46,51,54,57,59,61) étant interposées dans les diverses canalisations de liaison et reliées audit automate (5).

3. Installation suivant la revendication 2, caractérisée en ce que l'un des silos contenant du produit ne devant pas être broyé est un silo à maïs humide pulvérulent (42) auquel est associée une vis désileuse (41) reliée à la cuve de l'unité de mélangeage (3) par une canalisation (40) et commandée par ledit automate (5).

4. Installation suivant la revendication 2 ou 3, caractérisée en ce que ledit système de distribution comporte une canalisation (29) d'évacuation reliée à la cuve (18) de l'unité de mélangeage (3) par l'intermédiaire d'une casserole (27) à toile de fluidisation (28), reliée à ladite rampe distributrice (49), ladite canalisation (29) comportant une vanne (30) reliée à l'automate (5) en amont et en aval de laquelle sont branchées des canalisations d'injection d'air secondaire (58,60) reliées à ladite rampe (49), des vannes (57,59,61) étant interposées dans les canalisations de jonction entre la rampe (49) et la canalisation (29) et reliées à l'automate (5).

5. Installation suivant l'une des revendications 1 à 4, caractérisée en ce que l'unité de mélangeage (3) est constituée par une cuve cylindrique horizontale (18) et en ce que le système de brassage interne est constitué par deux spires horizontales de pas contraires (19,20) entraînées conjointement à partir d'un groupe moto-réducteur (22).

6. Installation suivant l'une des revendications 1 à 4, caractérisée en ce que l'unité de mélangeage (3) est constituée par une cuve tronconique (18') d'axe vertical et en ce que le système de brassage interne est constitué par une vis (64) entraînée en rotation autour de son axe ainsi qu'autour de l'axe de ladite cuve (18') en étant contrainte de suivre la paroi tronconique de cette dernière.

7. Installation suivant la revendication 5 ou 6, caractérisée en ce que la cuve (18,18') de l'unité de mélangeage (3) comporte un dispositif de fluidisation, par insufflation d'air sous pression, de la masse du produit en cours de mélange dans le but d'éviter tout compactage notamment en cas de produits pulvérulents humides.

FIG.1

0281490

FIG-2-

0281490

FIG.3.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 116 596  (V.J.C. VINCENT) <br> * Page 11, ligne 34 - page 12, ligne 7; figure 7 * <br> --- | 1 | A 23 N   17/00 |
| A | DE-A-3 321 731  (WEDA-DAMMANN & WESTERKAMP GmbH) <br> * Figure 1; abrégé * <br> --- | 1 | |
| A | FR-A-1 535 632  (A.Q.A.E. DE CAZENOVE) <br> --- | | |
| A | US-A-3 806 001  (W.C. PRATT) <br> --- | | |
| A | GB-A-1 554 692  (HUGHES STEEL PRODUCTS PTY. LTD) <br> --- | | |
| A | FR-A-2 406 397  (J. NAGY) <br> --- | | |
| A | FR-A-2 501 012  (J.G. DENIZOT) <br> ----- | | |

**DOMAINES TECHNIQUES RECHERCHES (Int. Cl.4)**

A 23 N

Le présent rapport a été établi pour toutes les revendications

| Lieu de la recherche | Date d'achèvement de la recherche | Examinateur |
|---|---|---|
| LA HAYE | 09-05-1988 | NEHRDICH H.J |